# EUROPEAN PATENT APPLICATION

(11) **EP 3 147 859 A1**
(43) Date of publication of application: **29.03.2017**
(21) Application number: 15187211.6
(22) Date of filing: 28.09.2015
(51) Int. Cl.: G06T 5/50, G06T 11/00

(54) **METHOD AND IMAGING SYSTEM FOR FORMING AN X-RAY IMAGE OF AN OBJECT**

(71) Applicant: Universität Zürich, 8006 Zürich (CH)
(72) Inventor: ANDREISEK, Gustav, 9063 Stein (CH); EPPENBERGER, Patrick, 8057 Zürich (CH)
(74) Representative: Kleine, Hubertus

(57) **Abstract**

The invention concerns a method for forming an x-ray image of an object with the following steps:
- Obtaining a set of three grey-scale x-ray images, each with different exposure parameters;
- Assigning different colours to the three different images; and
- Combining the coloured grey-scale images to one single colour image.

The invention further concerns an imaging system for forming an x-ray image of an object which is suited to perform the claimed method.

## Description

The invention relates to a method for forming an x-ray image of an object. The invention further relates to an imaging system suited for performing the method.

X-ray imaging is widely used for medical purposes in order to image an internal structure of a patient's body. X-ray imaging is also frequently used in technical applications and material science.

In all kinds of imaging techniques, regardless whether x-ray radiation or visible light is used, an important task is to choose suitable exposure values that maximize the contrast between differently absorbing or reflecting parts of the represented object. As with visible light photography, in x-ray imaging electronic digital sensors are nowadays mostly used as opposed to analog film material. Recording images with digital sensors, also called digital photography, makes processing of images easier. However, it is even more difficult to obtain high contrast images since the dynamic range of the light sensitive sensors is usually lower than that of analog film material.

To compensate for the lower dynamic range of digital sensors, a technique called high dynamic range (HDR)-photography has been developed. In HDR-photography a plurality of differently exposed photos (also called exposure series) is taken and combined to a single picture with a higher dynamic range. In the meantime standard image processing software is available to generate HDR-pictures from exposure series.

Patent document US 5, 436, 952 A describes a system and a method to reduce artefacts and to enhance the contrast of x-ray images in an imaging system using a charge-coupled device (CCD) sensor. The charge-coupled device is a widely used type of semiconductor image sensor used in professional, medical, and scientific applications where high-quality image data is required. The system comprises a detector which recognizes an over exposure of the semiconductor image sensor. If an over exposure is detected, a second image of different brightness is acquired, wherein the second image is exposed attenuated in comparison to the first image in order to avoid so-called blooming artefacts. Blooming artefacts can occur in overexposed areas of a CCD sensor when overflowing charges spill to neighbouring pixels, resulting in horizontal and vertical streaks. The image signals from both x-ray images are then superimposed in a mixer unit and the resulting image is displayed. In one embodiment, over exposed regions of the first image are replaced by the respective regions of the second image. The resulting image is displayed as a grey-scale image. In another embodiment, the two images are assigned two different colours in the resulting image. The advantage is that overexposed regions can be easily identified when the image is viewed and analysed.

Nowadays radiographic imaging systems are mostly equipped with flat panel detectors (FPD) rather than CCD sensors. In addition to a much higher spatial resolution and a broader dynamic range FPD have the significant advantage that blooming artefacts cannot occur, since the read out deals with each pixel independently and charge drain is available for each pixel.

It is an object of the present invention to provide a method for forming an x-ray image of an object in which contrast between differently absorbing structures in a patient's body is maximized. It is a particular object of the present invention to provide an imaging method which is suitable to distinguish different types of tissues.

This object is achieved by a method for forming an x-ray image and an imaging system according to the independent patent claims. Further developments and advantageous embodiments are given in dependent claims.

According to a first aspect of the invention, a method for forming an x-ray image of an object comprises the following steps: A set of three grey-scale x-ray images is obtained, each with different exposure parameters. Different colours are then assigned to the three different images, and the coloured grey-scale images are combined to form one single colour image.

Human observers are able to discriminate between 700 and 900 simultaneous shades of grey for the available luminance range of current medical displays under optimal conditions. For coloured images the range is much broader. The human visual system is capable to differentiate up to 10 million different colours. The use of three differently coloured grey-scale images to form a single colour image allows to make use of the human's capability to distinguish information with a much higher resolution, thereby being able to gather details that would otherwise be hidden. The use of three colours is particularly preferred since three colours span the full accessible colour space.

In advantageous embodiments of the method the three different grey-scale images are obtained with different exposures. Different exposures can be set for example by choosing different exposure times.

In a further advantageous embodiment of the method the different grey-scale images are obtained at different electron energies of an x-ray tube. Contrast in x-ray imaging is generated by x-ray attenuation mainly as a result of the photoelectric and the Compton effects depending on the atomic number and the physical density of the irradiated tissue as well as the energy of the radiation used. The photoelectric effect is typically observed below an electron energy of 100 kilo electron-volts (keV) and radiation absorption is primarily associated with the atomic number of the tissue's material. Whereas the Compton Effect is typically observed above 100 keV and radiation absorption is primarily associated with tissue density. Images generated at different energies allow to distinguish between the different attenuation effects which in turn points towards the involved tissue. By using different energies in the described preferred embodiment, information on the different tissues is included into the resulting single coloured image.

In a further advantageous embodiment of the method the three different colours assigned to the grey-scale images are basic colours, in particular a red colour, a green colour and a blue colour. If different electron energies are used, it is preferred that the image obtained at a lowest energy is assigned the red colour, the image obtained at a medium energy is assigned the green colour and the image obtained at a highest energy is assigned the blue colour. This leads to an intuitive colour coding of the resulting image, in which soft tissues are represented in the blue and green colour spectrum, whereas mineralized structures such as bones or scales are represented in the yellow to red colour spectrum.

In a further advantageous embodiment of the method a high dynamic range algorithm is used to combine the coloured grey-scale images to the single colour image. Additionally, the single colour image might be further processed for adaption to the physiology of the human visual system. The further processing of the single colour image can for example comprise the application of an algorithm according to Reinhard.

The described method is not restricted to conventional x-ray imaging, but might also be applied to grey-scale x-ray images obtained by a cross-sectional radiography technique, for example computed tomography (CT) radiography technique.

According to a second aspect of the invention, an imaging system for forming an x-ray image of an object comprises an x-ray imaging apparatus, a control system for controlling the x-ray imaging apparatus and an image processing unit. The system is characterized in that it is designed to perform a method as described above. The same advantages arise.

The invention will be explained in more detail in the following using exemplary embodiments and with reference to figures. In this case:
- Figure 1: shows a schematic illustration of an imaging system for forming an x-ray image of an object;
- Figure 2: shows a set of differently exposed x-ray images; and
- Figure 3: shows an image obtained by a method according to the application.

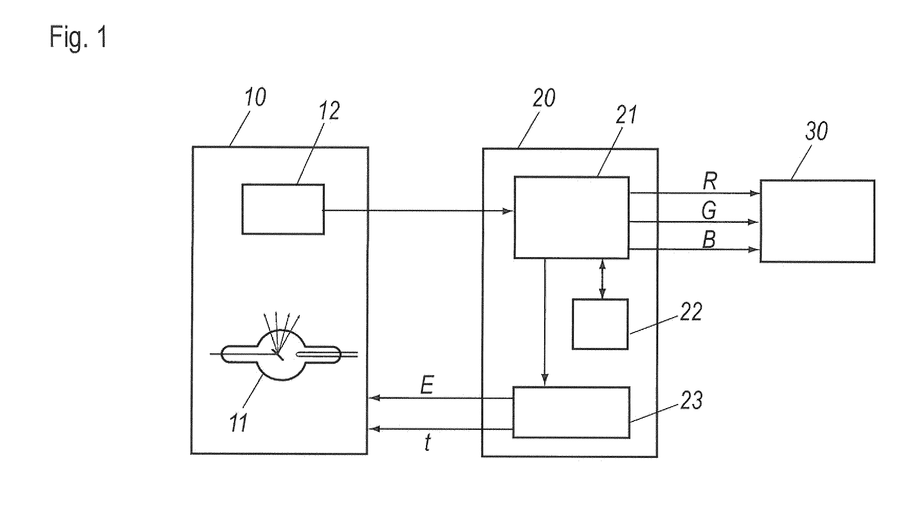

Figure 1 schematically shows the basic structure of an x-ray imaging system suitable for performing a method according to the present invention.

The system comprises an x-ray apparatus 10 with an x-ray tube 11, which is only schematically indicated in the figure. The x-ray tube 11 emits x-ray radiation of a tuneable energy E, typically in the range of several 10 to 200keV. Furthermore, an exposure time t can be selected. The exposure time t determines how long an object is exposed to the x-ray radiation.

The exposure of an x-ray image is usually specified by the total electron charge used to generate the x-rays in the x-ray tube. The charge is determined by multiplying the electron current of an x-ray tube with the exposure time, or, in case the electron current is not constant, by integrating the current over the exposure time. The exposure is then given in milliampere-seconds (mAs).

After having passed through an object, for example a patient's body, the x-rays are detected by an image converter which comprises a CCD (charge coupled device) sensor 12.

A control system 20 is used for processing data provided by the CCD sensor 12 and for controlling the x-ray apparatus 10, in particular by setting the energy E and the exposure time t as the exposure parameters. The control system 20 comprises a processing unit 21, which is connected to a memory 22 for storing processed data. The processing unit 21 is furthermore connected to a controller 23, which for example communicates with the x-ray apparatus 10 in order to set the exposure parameters (energy E, exposure time t).

The control system 20 is connected to a display 30, which in this case is a full coloured display, for example an RGB (red-green-blue) display. The control system 20 furthermore provides a user interface, for example a keyboard or the like. The control system 20 can be based on a PC-system supplemented by the controller 23.

In the shown exemplary embodiment, controlling of the x-ray apparatus 10 and image processing is performed by the control system 20. In alternative embodiments, separate systems for controlling the x-ray apparatus 10 and for processing images can be used.

In a method according to the application a set of at least three x-ray images is obtained using different exposure parameters for each image. Then, the three differently exposed images are assigned three different colours and are combined to one single coloured image. The method and advantageous embodiments are explained in the following in more detail.

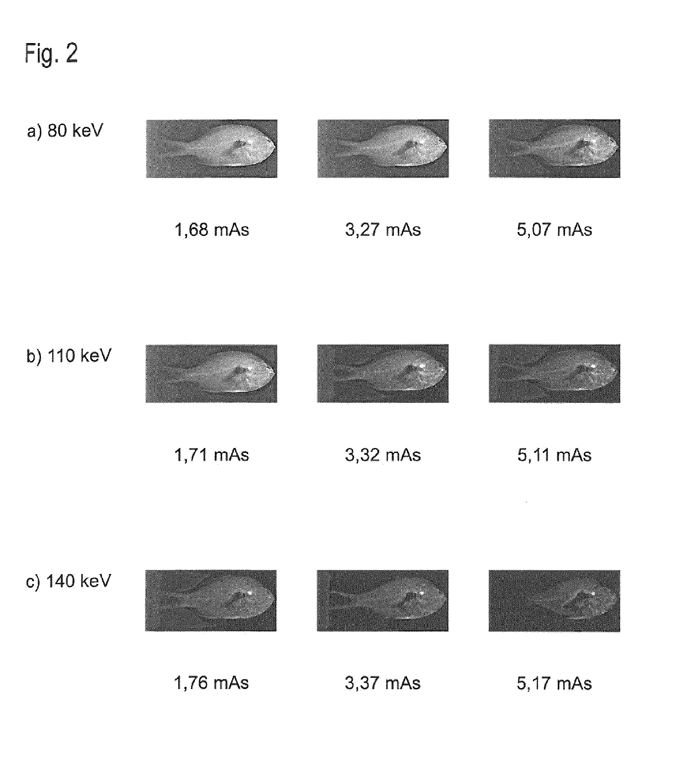

Figure 2 shows a set of in total nine x-ray images which were obtained at different exposure settings. The imaged object in this case is a fresh fish (Red Snapper, lutjanus malabaricus). This object provides tissues with a range of densities that typically can be encountered in diagnostic radiographic imaging, including air filled spaces up to calcifications.

Imaging was performed with a setup comparable to the system shown in figure 1. The used x-ray apparatus was a standard clinical x-ray unit, namely the system Polydoros LX-80, provided by Siemens Healthcare, Germany. Images are obtained and stored in a 12-bit grey-scale data format.

All nine images shown are obtained by using different exposure parameters. Top row a) shows a series of images obtained at an electron energy used in the x-ray tube of E=80 keV. Within each row, the exposure time is varied from a shorter exposure time on the left hand side to a longer exposure time on the right hand side. The resulting exposure for each image is specified in figure 2 in mAs. The exposure intensity varies from 1.68 mAs for the first picture on the left hand side of the top row to 3.27 mAs in the middle of the top row and 5.07 mAs on the right hand side of the top row.

The middle row b) of figure 2 shows images obtained at an energy of E=110 keV. Again, different exposure times were used, which resulted in exposures of 1.71 mAs, 3.32 mAs and 5.11 mAs, respectively (from left to right).

The bottom row c) of figure 2 shows a third series of images obtained at an energy of E=140 keV. Here, exposure varies from 1.76 mAs to 3.37 mAs to 5.17 mAs (again from left to right).

In order to create a resulting high dynamic range picture, three differently exposed images are chosen from the set of pictures shown in figure 2: One underexposed image from the left column of pictures, a medium exposed picture from the middle column of images and an overexposed image from the right column of images.

Generally, the three selected pictures could be obtained from a single of the three rows a), b) or c) or of two of the three rows.

In the present example three images obtained at different energies E are selected. The selected images are marked with a star (*) in figure 2: The underexposed image is obtained at the lowest energy of E=80 keV, the medium exposed image is obtained at the medium energy of E=110 keV, and the overexposed image is obtained at the highest energy of E=140 keV.

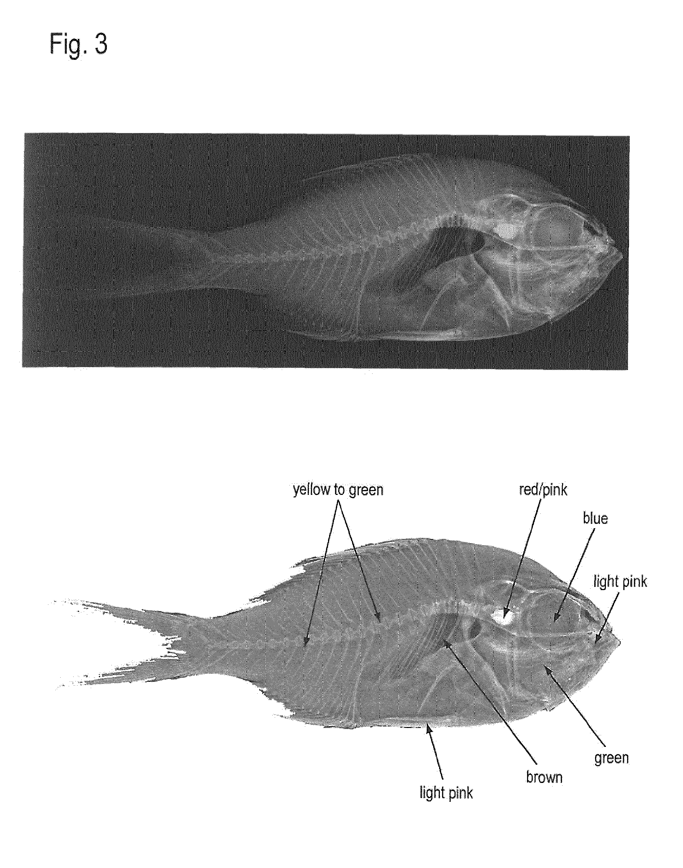

Each of the three selected images is now assigned a different colour. Preferably, the assigned colour is a colour corresponding to one of the three basic colour channels used by a display unit of the system, for example the display 30 shown in figure 1. As indicated in figure 2, the image obtained at the lowest energy of E=80 keV is assigned to the red colour channel (R), the image obtained at the medium energy of E=110 keV is assigned to the green colour channel (G) and the image obtained by the highest energy of E=140 keV is assigned to the blue colour channel (B). The three coloured images are then combined to one single high dynamic range (HDR) image, which is depicted in figure 3.

The upper part of figure 3 shows the obtained HDR- image. Due to the restrictions in colour production in patent literature, an annotated version of the obtained HDR-image is depicted in the bottom part of figure 3. In this annotated image, the black background which surrounds the image of the object is removed. Furthermore, arrows pointing towards some selected features of the object are added which describe the colour of this feature visible in the full-coloured reproduction of the obtained HDR- image.

A commercially available HDR-software (Adobe Photoshop CS5) was used to obtain the single coloured image. A colour depth of 16-bit per channel was used and post-processed images were stored as individual coloured 16-bit per channel Tagged-Image File Format (TIFF) files. The three TIFF images where then combined to a single HDR image using the software's dedicated HDR-algorithm, which was originally developed for processing differently exposed digital photos. The final image had a colour depth of 32-bit per channel and was stored as an individual HDR-file, like it is supported by most HDR-image editors, using 4 bytes per pixel, one byte mantissa for each RGB channel and a shared one byte exponent. The latter format allows preservation of all contained image information per pixel (full dynamic range). In order to display the HDR-image on a regular 24-bit true-colour display with typically 8-bit per channel, a tone mapping algorithm was applied. An algorithm called Reinhardt algorithm was chosen, because it generates only little artifacts and is well suited for non-pictorial images. Application of the Reinhardt algorithm resulted in an 8-bit colour image file that was stored using the TIFF format.

As visible even in a grey scale reproduction of the HDR-image in Fig. 3, the obtained image shows features of the object in high contrast and with a very detailed resolution and without any visible artefacts. In addition, different tissues show up in different colours and can thus be identified easily. Soft tissues in accordance to the predominance of contained elements with a low atomic number are thereby represented in the blue and green colour spectrum, whereas mineralized structures such as bones, or scales in case of the object imaged in the example of figures 2 and 3 are represented in the yellow to red colour spectrum.

In conventional radiography, contrast is generated by x-ray attenuation mainly as a result of the photoelectric and the Compton effects depending on the atomic number and the physical density of the irradiated tissue as well as the energy of the radiation used. The photoelectric effect is typically observed below 100 keV and radiation absorption is primarily associated with the atomic number of the tissue's material. Whereas the Compton effect is typically observed above 100 keV and radiation absorption is primarily associated with tissue density.

Images generated at a given energy do not provide any means for distinguishing the different attenuation effects. The combination of images taken at different energies according to the preferred embodiment of present application allows to distinguish between the different attenuation effects which in turn points towards the involved tissue.

Furthermore, the human eye is limited in the perception of high range greyscale images. Human observers are able to discriminate between 700 and 900 simultaneous shades of grey for the available luminance range of current medical displays under optimal conditions. Current monochromatic medical displays are therefore typically capable of displaying between 256 and 1,024 grey shades (equivalent to a "bit-depth" of 8 to 10 bit). For coloured images the range is much broader and includes electromagnetic radiation from about 380 nm to about 750 nm. The human visual system is therefore capable to differentiate up to 10 million different colours. The absorption maxima of the photoreceptor proteins in human cone cells lie at around 426, 530, and 560 nm which correspond to the blue, green, and red regions of the visible light spectrum. These colours are referred to as the primary colours. In the RGB model currently used by the display manufacturing industry for the last decades, every colour pixel in a digital image is created through a combination of these three primary colours. Each of these primary colours is often referred to as a "colour channel".

Overall, coloured images can contain a much larger volume of information compared to grey-scale images, which is made use of in the present application. The additionally applied tone mapping algorithm allows a representation of all contained information on a regular colour display with a dynamic range of 8-bit per channel without the need for windowing as it is otherwise often necessary to evaluate radiographic images.

The described embodiments use a conventional x-ray imaging process. In alternative embodiments, the method according to the application can also be applied to cross-sectional imaging techniques such as CT (computed tomography).

Similar to non cross-sectional imaging, three differently exposed image sets are obtained, advantageously at different energies, e.g. at energies of 70 kV, 100 kV and 140 kV. It is preferred to turn automatic tube current modulation, which is usually used for obtaining CT-images, off. Images can for example be obtained by using a standard clinical dual source 2x128 slice CT scanner unit. Three cross-sectional image sets are reconstructed using a standard filtered back projection (FBP) CT reconstruction algorithm and co-registered in axial orientation and stored, e.g. in a standard CT DICOM (digital imaging and communications in medicine) format.

From these three cross-sectional image-sets three corresponding slices are chosen to generate a single HDR image. To do so, the slices are assigned to three standard colour channels, red, green, and blue, respectively and processed in the same way the standard radiographic images were processed, as described before. The resulting 8-bit colour image files, each corresponding to a cross-sectional slice, are then exported into a new cross sectional axial image set which is again stored in standard CT DICOM format.

### Reference signs

- 10: x-ray imaging apparatus
- 11: x-ray tube
- 12: CCD-sensor

- 20: control system
- 21: processing unit
- 22: memory
- 23: controller

- 30: display

- E: energy
- t: exposure time

- R: red colour channel
- G: green colour channel
- B: blue colour channel

## Claims

1. Method for forming an x-ray image of an object comprising the following steps:
- Obtaining a set of three grey-scale x-ray images, each with different exposure parameters;
- Assigning different colours to the three different images; and
- Combining the coloured grey-scale images to one single colour image.

2. The method according to claim 1, wherein the three different grey-scale images are obtained with different exposures.

3. The method according to claim 2, wherein the different exposures are set by choosing different exposure times (t).

4. The method according to one or more of claims 1 to 3, wherein the different grey-scale images are obtained at different electron energies (E) of an x-ray tube (11).

5. The method according to one or more of claims 1 to 3, wherein the three different colours assigned to the grey-scale images are basic colours.

6. The method according to claim 5, wherein the three different colours assigned to the grey-scale images are a red colour, a green colour and a blue colour.

7. The method according to claims 4 and 6, wherein the image obtained at a lowest energy is assigned the red colour, the image obtained at a medium energy is assigned the green colour and the image obtained at a highest energy is assigned the blue colour.

8. The method according to one or more of claims 1 to 7, wherein a high dynamic range algorithm is used to combine the coloured grey-scale images to the single colour image.

9. The method according to claim 8, wherein the single colour image is further processed for adaption to the physiology of the human visual system.

10. The method according to claim 9, wherein further processing of the single colour image comprises the application of an algorithm according to Reinhard.

11. The method according to one or more of claims 1 to 10, wherein the three grey-scale x-ray images are obtained using a cross-sectional radiography technique.

12. The method according to claim 11, wherein the cross-sectional radiography technique is a CT radiography technique.

13. Imaging system for forming an x-ray image of an object, the system comprising an x-ray imaging apparatus (10), a control system (20) for controlling the x-ray imaging apparatus (10) and an image processing unit, **characterized in that** the system is designed to perform a method according to one of claims 1 to 12.
